# EUROPÄISCHE PATENTSCHRIFT

(11) **EP 0 627 586 B1**
(45) Veröffentlichungstag und Bekanntmachung des Hinweises auf die Patenterteilung: **25.09.1996**
(21) Anmeldenummer: 94105133.6
(22) Anmeldetag: 31.03.1994
(51) Int. Cl.: F16L 3/00, F16L 55/00, F16K 27/00, F16M 1/00, F16B 1/00, F16M 7/00

(54) **Befestigungsvorrichtung für das Gehäuse einer Absperrarmatur für eine erd- oder freiverlegte Versorgungsleitung**
Mounting device for the housing of a shut off armature for buried or free laid supply-pipes
Dispositif de fixation pour le boîtier d'une robinetterie d'arrêt pour une conduite de distribution posée enterrée ou découverte

(30) Priorität: 04.05.1993 DE 4314562
(43) Veröffentlichungstag der Anmeldung: 07.12.1994
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- EP-A- 0 328 909
- AT-B- 394 766
- DD-B- 255 775
- DE-A- 3 406 955
- DE-A- 4 010 633
- FR-A- 2 631 677
- US-A- 3 848 839
- US-A- 4 433 825

## Beschreibung

Die Erfindung betrifft eine Absperrarmatur für eine erd- oder freiverlegte Versorgungsleitung. Die Absperrarmatur, vorzugsweise ein Absperrschieber, insbesondere für Gasleitungen, ist in einem Gehäuse befindlich, welches zwei Anschlußstutzen für den Anschluß der Rohre der Versorgungsleitung aufweist.

Derartige Absperrarmaturen sind in verschiedenen Ausführungsformen bekannt. Sie haben meist ein als Gußstück hergestelltes Gehäuse. Sie werden relativ wenig benutzt und stehen oft jahrelang in geöffnetem Zustand ohne daß sie verschlossen werden. Erst wenn eine Reparatur oder eine Baumaßnahme an dem abzusperrenden Leitungsstück erforderlich werden, wird der Verschließkörper durch Drehen der Betätigungswelle bewegt. Diese hat sich im Laufe der langen Zeit festgesetzt, wofür es eine Reihe von Ursachen, vor allem Korrosionserscheinungen, Festkleben von Dichtungen, Erhärten von Schmierfetten u.a. gibt. Dann müssen zum Drehen der Welle große Momente aufgebracht werden, die sich auf das Gehäuse der Absperrarmatur übertragen und dann von der Rohrleitung aufgenommen werden. Das ist in vielen Fällen unerwünscht, insbesondere bei aus Kunststoffrohren hergestellten Leitungen und vorzugsweise dort, wo die Leitungen frei oder in lockerem Erdreich verlegt sind und insbesondere dort, wo in diesen Leitungen Gas transportiert wird.

Um ein Gehäuse einer Absperrarmatur zu fixieren, geht man bisher so vor, daß man über die rohrartigen, an die Leitungsrohre anzuschließenden Anschlußstutzen je einen Bügel setzt und diese beiden Bügel mit einem Fundament, vorzugsweise aus Beton, fest verbindet, wie es aus der DE-A-34 06 955 im Rohrleitungsbau bekannt geworden ist. Ähnliche Befestigungsmöglichkeiten sind im Rohrleitungsbau Befestigungen mit Rohrschellen, wie sie in verschiedenen Ausführungsformen durch die EP-A-0 328 909, AT-B-394 766 oder auch die US-A-3 848 839 bekannt geworden sind. Diese allerdings werden meist in Verbindung mit zwischen Rohr und Rohrschelle gelegten Gummimanschetten zur Verhinderung der Geräuschübertragung eingesetzt, wodurch das befestigte Rohr die Möglichkeit hat, sich in der Rohrschelle zu bewegen, was gerade im oben genannten Anwendungsfall vermieden werden soll. Um diesen Nachteil bei Rohrleitungen zu vermeiden, ist es aus der DE-A-4 010 633 bekannt geworden, eine ganze Reihe von das Rohr mit Manschetten umfassenden Rohrschellen an einem Halter anzuordnen.

Die Befestigung mit Bügeln ist eine recht umständliche und zeitaufwendige Angelegenheit, denn das Fundament aus Beton muß gegossen werden, es muß dann erhärten und erst dann können die Befestigungsarbeiten vorgenommen werden. Diese leiden dann oftmals darunter, daß das Fundament nicht paßgenau erstellt wurde. Die Bügel müssen auch ein gewisses Spiel aufweisen. Dann ist die ganze Befestigung schon wieder für den oben genannten Zweck des Festhaltens des Absperrschiebergehäuses bei großen Drehmomenten nicht oder nur unzureichend geeignet, denn ausreichend fest zur Aufnahme großer Momente ist diese Art der Befestigung nicht.

Aus dem Bau von Zentifugalpumpen für die Nukleartechnik ist es durch die US-A-4 433 825 bekannt geworden, ein Pumpengehäuse in zwei ringförmige Halter einzuspannen, welche mit Bohrungen versehene Ansätze aufweisen die mit Schrauben auf einem besonders geformten Fundament festgeschraubt werden. Auch das bedeutet einen erheblichen Montageaufwand bei der Herstellung der Pumpe sowie die Herstellung eines besonders geformten Sokkels, der dann seinerseits auf einem gesondert hergestellten Fundament zu befestigen ist. So hoher Aufwand wird von den Versorgungsunternehmen für eine in weiter Zukunft liegende Notwendigkeit nicht getrieben, obwohl es aus Gründen der Unfallverhütung notwendig ist, das Gehäuse einer Absperrarmatur so festzulegen, daß große aufgewandte Drehmomente nicht dazu führen, daß eine Kunststoffrohrleitung infolge der Drehung des Gehäuses Schaden nimmt oder sich aus ihrer Befestigung am Gehäuse löst und dadurch zum Ausströmen von Gas führt.

Die Erfindung beseitigt die Nachteile des Standes der Technik. Es ist die Aufgabe der Erfindung, mit einfachen Mitteln eine wirksame und universelle Befestigungsmöglichkeit für das Gehäuse einer Absperrarmatur zu schaffen, die zur Aufnahme und Ableitung großer Drehmomente geeignet ist.

Die Erfindung besteht darin, daß das Gehäuse mindestens eine mit einem Loch versehene Lasche aufweist, durch das ein Befestigungsmittel hindurchgesteckt ist, welches an einem Anker oder einem Fundament befestigt ist, wobei das Gehäuse und die Laschen einstückig als ein Gußstück gefertigt sind.

Diese mit einem Loch versehenen Laschen lassen sich in einfacher Weise und fast ohne nennenswerten Mehrarbeitsaufwand bei der Herstellung des Gehäuses einstükkig zusammen mit dem Gehäuse herstellen. Dabei geben diese Laschen einen sehr festen Halt, wenn man sie mit Befestigungsmitteln wie Schrauben oder Bolzen mit einem Anker oder einem Fundament verbindet. Sie bilden viel festere und haltbarere Befestigungen als Bügel, sie sind auch leichter bei der Montage mit den Widerlagern zu verbinden.

Als besonders einfach und vorteilhaft hat es sich erwiesen, wenn ein Paar von Laschen an der Unterseite des Gehäuses angebracht ist.

Vorteilhaft kann es aber auch sein,daß ein Paar von Laschen an mindestens einer Seite des Gehäuses angebracht ist.

Die Herstellung und Montage des Widerlagers ist besonders einfach und kostengünstig, wenn der Anker aus einem mit Löchern für das Befestigen der Laschen versehenen Metallprofil besteht, vorzugsweise einem winkel-, oder schienen- oder T-Profilstück.

Es ist aber auch möglich, daß der Anker aus einem Betonklotz oder einer Betonplatte besteht, die mit Gegenlaschen für das Anbringen der Laschen versehen sind.

Das Wesen der Erfindung ist nachstehend anhand eines in der Zeichnung schematisch dargestellten Ausführungsbeispieles näher erläutert. Es zeigen:
- Fig 1: eine Seitenansicht des Absperrschiebers mit einer an der Unterseite angeformten Lasche mit zwei Löchern,
- Fig.2: eine Seitenansicht diees Absperrschiebers, befestigt an einem Anker,
- Fig.3: eine Seitenansicht eines Absperrschiebers mit zwei seitlich angebrachten Laschenpaaren, der mittels Stützen aunf einem Betonfundament befestigt ist.
- Fig.4: eine Ansicht von oben auf den Absperrschieber mit zwei seitlich angebrachten Laschenpaaren,
- Fig.5: eine Seitenansicht eines direkt auf ein Betonfundament geschraubten Absperrschiebers.

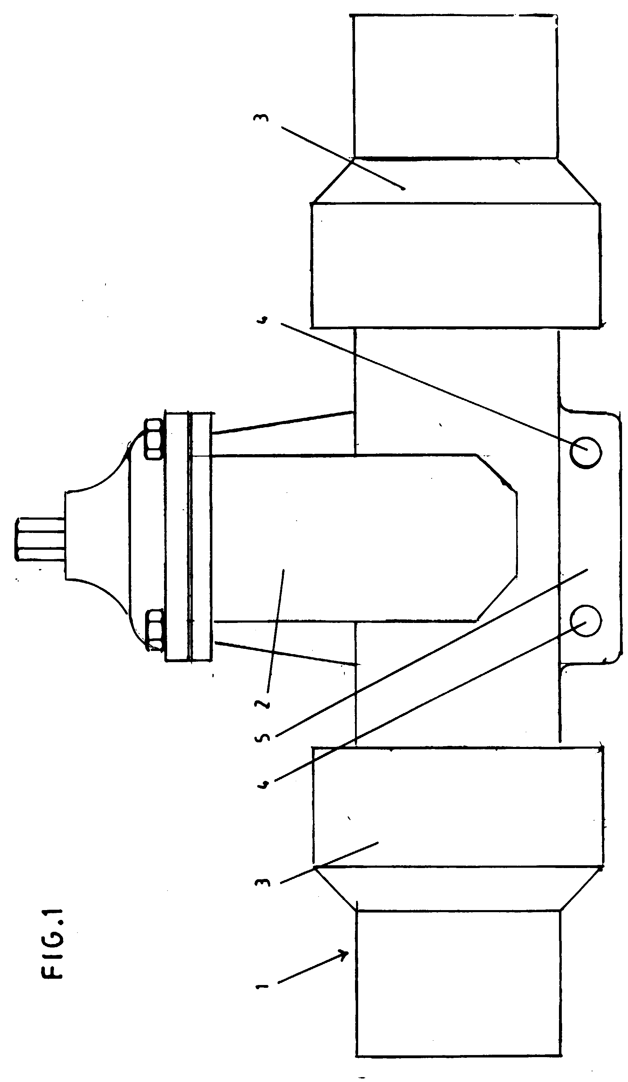

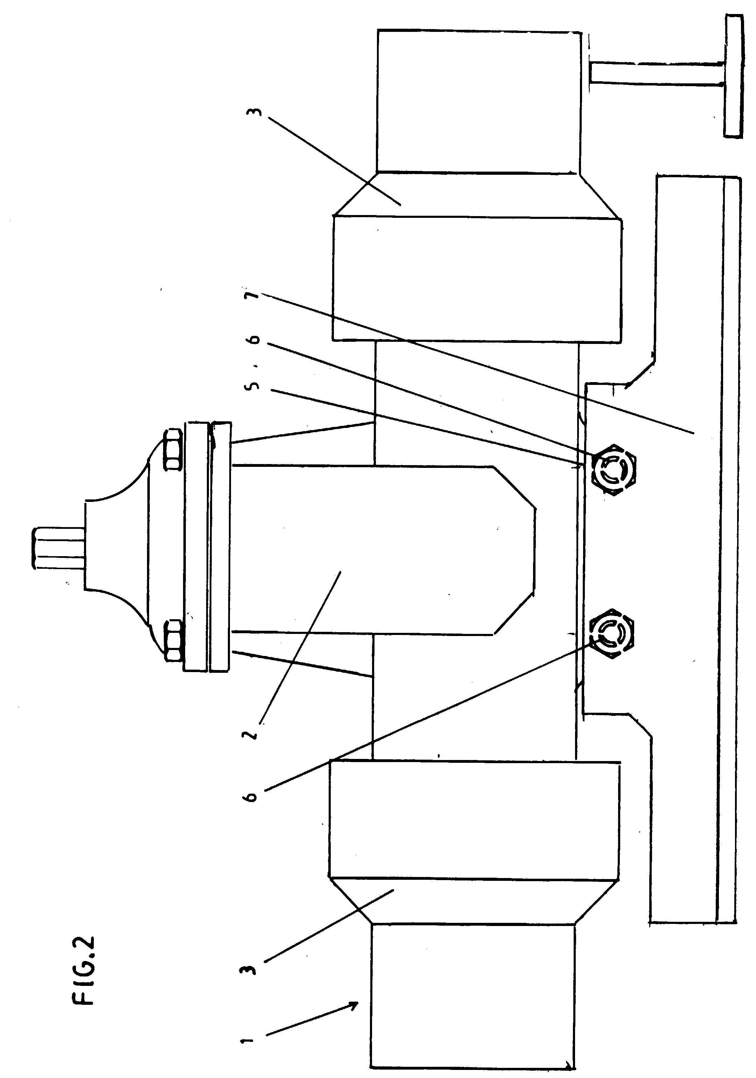

Die in den Fig. 1 und 2 dargestellte Absperrarmatur für eine erd- oder freiverlegte Versorgungsleitung 1 ist, die in einem Gehäuse 2 befindlich, welches zwei Anschlußstutzen 3 für den Anschluß der Rohre der Versorgungsleitung 1 aufweist. Dieses Gehäuse 2 weist eine mit zwei Löchern 4 versehene Lasche 5 auf. Durch jedes Loch ist ein Befestigungsmittel in Form einer Schraube 6 hindurchgesteckt, welche durch ein entsprechendes Loch an einem Anker 7 hindurchgesteckt und befestigt ist. Diese Lasche 4 ist an der Unterseite des Gehäuses 2 angebracht.

Dabei ist es vorteilhaft, wenn der Anker 7 aus einem mit Löchern 8 für das Befestigen der Laschen 5 versehenen Metallprofil besteht, vorzugsweise einem Winkel, einer Schiene oder einem T-Profilstück.

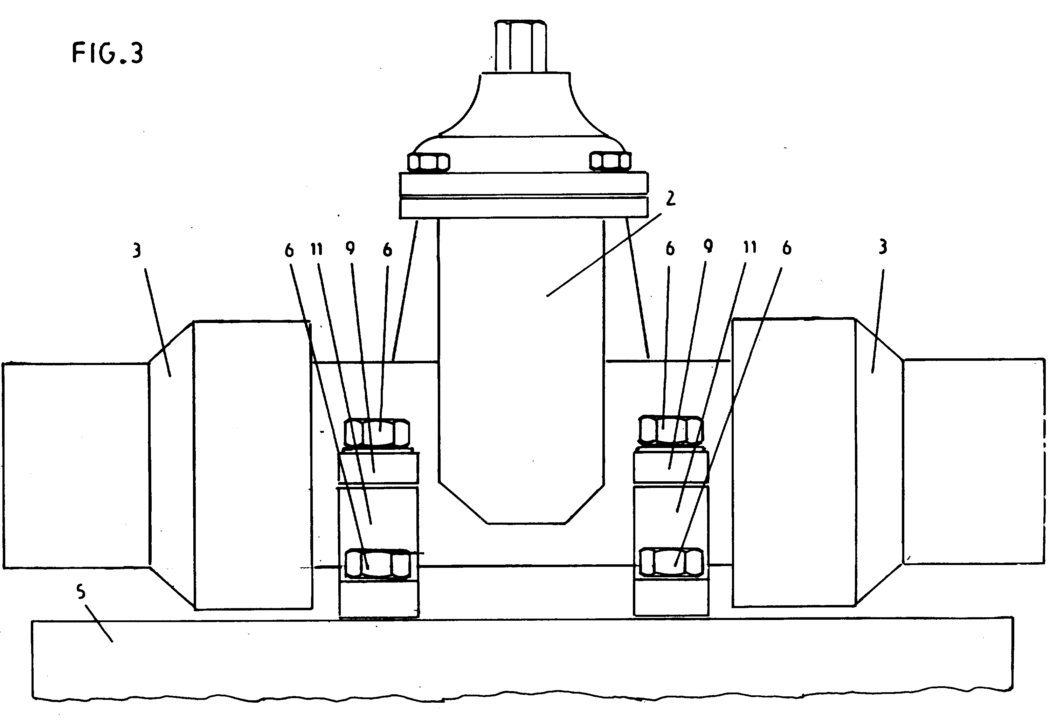

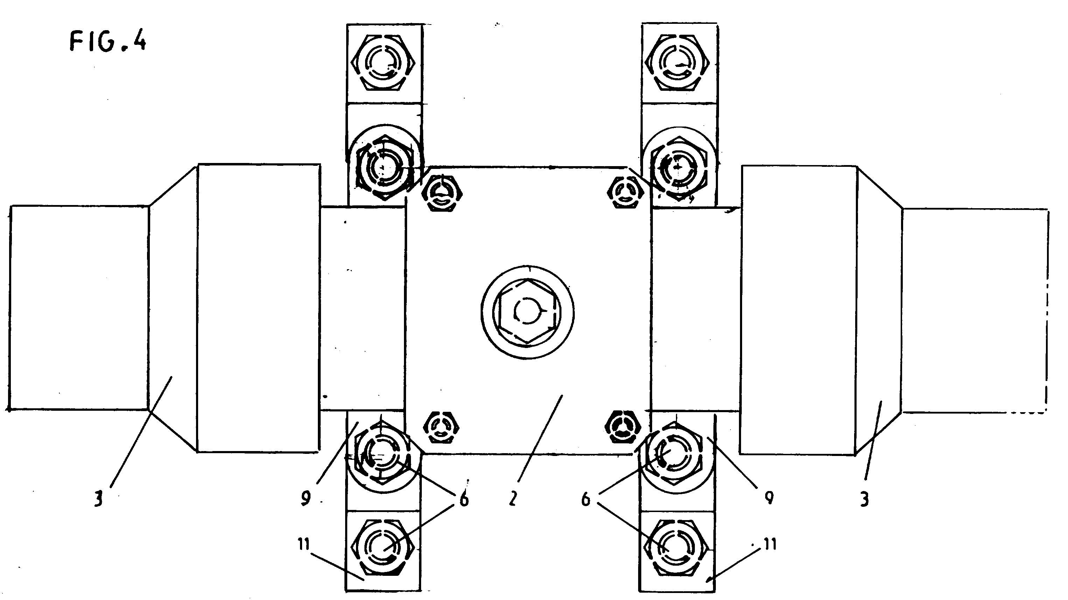

Eine andere Anbringungsmoglichkeit ist in Fig.3 und 4 gezeigt: Hier ist ein Paar von Laschen 9 mit je einem Loch 4 an einer Seite des Gehäuses 2 angebracht.

Hier besteht der Anker oder besser gesagt das Fundament aus einem Betonklotz oder einer Betonplatte 10, die mit Gegenlaschen 11 für das Anbringen der Laschen 9 versehen sind. Diese Gegenlaschen 11 sind von gekröpfter Form und mittels weiterer Schrauben 6 am Betonfundament 10 befestigt, wozu in das Fundament Löcher gebohrt, Dübel eingesetzt und dann die Schrauben 6 durch die für sie vorgesehenen Löcher in den Gegenlaschen 11 gesteckt und in die Dübel eingedreht sind.

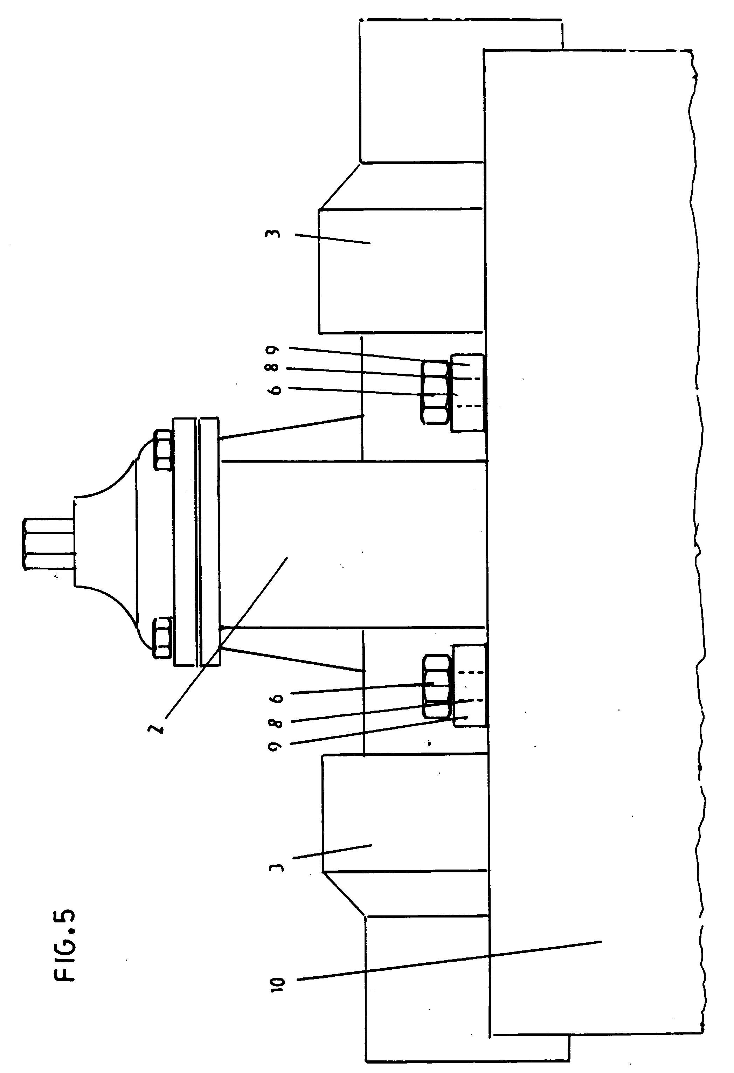

Im Ausführungsbeispiel der Fig. 5 ist das Fundament 10 um den unteren Teil des Absperrschiebergehäuses 2 herumgegossen und die durch die Löcher in den Laschen 9 gesteckten Schrauben 6 sind direkt in in Löcher des Fundamentes 10 eingesetzte Dübel eingeschraubt.

In diesen Ausführungsformen ist es zweckmäßig, wenn das Gehäuse und die Laschen als ein Gußstück einstückig gefertigt sind.

### Liste der Bezugszeichen

- 1: Versorgungsleitung
- 2: Gehäuse
- 3: Anschlußstutzen
- 4: Loch
- 5: Lasche
- 6: Schraube
- 7: Anker
- 8: Loch
- 9: Lasche
- 10: Betonfundament
- 11: Gegenlasche

## Patentansprüche

1. Absperrarmatur für eine erd- oder freiverlegte Versorgungsleitung, welche zwei Anschlußstutzen (3) für den Anschluß der Rohre der Versorgungsleitung aufweist,
dadurch gekennzeichnet,
daß das Gehäuse (2) der Absperrarmatur mindestens eine mit mindestens einem Loch (4) versehene Lasche (5,9) aufweist, durch das ein Befestigungsmittel (6) hindurchgesteckt ist, welches an einem Anker (7) oder Fundament (10) zu befestigen ist,
wobei das Gehäuse (2) und die Laschen (5,9) als ein Gußstück gefertigt sind.

2. Absperrarmatur nach Anspruch 1,
dadurch gekennzeichnet,
daß eine Lasche (5) mit einem Paar von Löchern (4) oder ein Paar von Laschen (5) mit je einem Loch (4) an der Unterseite des Gehäuses (2) angebracht ist.

3. Absperrarmatur nach Anspruch 1,
dadurch gekennzeichnet,
daß ein Paar von Laschen (9) an mindestens einer Seite des Gehäuses (2) angebracht ist.

4. Absperrarmatur nach Anspruch 1,
dadurch gekennzeichnet,
daß der Anker (7) aus einem mit Löchern (8) für das Befestigen der Laschen (5,9) versehenen Metallprofil besteht, vorzugsweise einem Winkel-, oder einem Schienen- oder einem T-Profilstück.

5. Absperrarmatur nach Anspruch 1,
dadurch gekennzeichnet,
daß das der Anker als Betonfundament (10) ausgebildet ist oder aus einem Betonklotz oder einer Betonplatte besteht, in die mindestens ein Loch für die Aufnahme eines Dübels zur Aufnahme einer durch das Loch 8 der Lasche 9 gesteckte Schraube (6) eingebracht ist oder die mit vorzugsweise einbetonierten oder angeschraubten Gegenlaschen (11) für das Anbringen der Laschen (9) versehen sind.

## Claims

1. Shut-off valve for a supply line laid underground or above ground, which exhibits two connectors (3) for connection of the pipes of the supply line, characterised in that the housing (2) of the shut-off valve exhibits at least one lug (5, 9) provided with at least one hole (4) through which a fixing means (6) is passed which is to be secured to an anchor (7) or foundation (10), the housing (2) and the lugs (5, 9) being made as a casting.

2. Shut-off valve according to claim 1, characterised in that a lug (5) with a pair of holes (4) or a pair of lugs (5) each with a hole (4) is provided on the underside of the housing (2).

3. Shut-off valve according to claim 1, characterised in that a pair of lugs (9) is provided on at least one side of the housing (2).

4. Shut-off valve according to claim 1, characterised in that the anchor (7) consists of a metal profile, preferably an angle profile or a rail profile or a T-profile, provided with holes (8) for fixture of the lugs (5, 9).

5. Shut-off valve according to claim 1, characterised in that the anchor takes the form of a concrete foundation (10) or consists of a concrete block or a concrete slab in which is provided at least one hole for receiving a dowel for receiving a bolt (6) passed through the hole (8) of the lug (9) or which are provided with counter lugs (11) preferably concreted in or bolted in place for attachment of the lugs (9).

## Revendications

1. Robinetterie d'arrêt pour une conduite de distribution posée enterrée ou découverte, qui présente deux tubulures de raccordement (3) pour le raccordement des tubes de la conduite de distribution, caractérisée en ce que le boîtier (2) de la robinetterie d'arrêt présente au moins une oreille (5, 9), munie d'au moins un trou (4) à travers lequel est enfiché un moyen de fixation (6) qui est à fixer à une pièce d'ancrage (7) ou à une pièce de fondation (10), le boîtier (2) et les oreilles (5, 9) étant fabriqués sous forme d'une pièce coulée.

2. Robinetterie d'arrêt selon la revendication 1, caractérisée en ce qu'une oreille (5) présentant une paire de trous (4) ou une paire d'oreilles (5) présentant chacune un trou (4) est placée sur le côté inférieur du boîtier (2).

3. Robinetterie d'arrêt selon la revendication 1, caractérisée par le fait qu'une paire d'oreilles (9) est placée sur au moins un côté du boîtier (2).

4. Robinetterie selon la revendication 1, caractérisée par le fait que la pièce d'ancrage (7) est constituée d'un profilé métallique muni de trous (8) pour la fixation des oreilles (5, 9), de préférence d'une équerre ou d'un rail ou d'un profilé en T.

5. Robinetterie d'arrêt selon la revendication 1, caractérisée par le fait que la pièce d'ancrage est conçue sous forme d'une pièce de fondation en béton (10) ou est constituée d'un bloc de béton ou d'une plaque de béton dans lesquels est prévu au moins un trou pour recevoir une cheville pour recevoir une vis (6) enfichée à travers le trou (8) de l'oreille (9), ou bien qui sont munis de contre-oreilles (I 1), de préférence placées à la coulée du béton ou vissées, pour l'installation des oreilles (9).
